# EUROPEAN PATENT APPLICATION

(11) **EP 4 761 172 A1**
(43) Date of publication of application: **17.06.2026**
(21) Application number: 24882403.9
(22) Date of filing: 23.10.2024
(51) Int. Cl.: H04L 9/12

(54) **EFFICIENT VERNAM'S ONE TIME PAD ENCRYPTION METHOD FOR OPTICAL SPACE COMMUNICATION**

(30) Priority: 25.10.2023 JP 2023183036
(71) Applicant: National Institute of Information and Communications Technology, Koganei-shi, Tokyo 184-8795 (JP)
(72) Inventor: FUJIWARA, Mikio, Koganei-shi, Tokyo 184-8795 (JP); OZAWA, Shunsuke, Koganei-shi, Tokyo 184-8795 (JP); KITAMURA, Mitsuo, Koganei-shi, Tokyo 184-8795 (JP); NISHIZAWA, Ryoji, Koganei-shi, Tokyo 184-8795 (JP)
(74) Representative: Peters, Sebastian Martinus
(86) International application number: PCT/JP2024/037658
(87) International publication number: WO 2025/089292

(57) **Abstract**

[Problem] To provide an optical space communication system that enables efficient data transmission even when packet loss occurs in encrypted packets.

[Solution] A system for performing optical space communication between a transmitting device and a receiving device, the system comprising:
the transmitting device comprising:
an encrypting unit configured to encrypt data using an encryption key to obtain encrypted data;
a packet generating unit configured to add information related to the data size of the encrypted data, data identification information, and information related to the encryption key to the encrypted data, and generate the optical space communication packet;
a packet transmitting unit configured to transmit the optical space communication packet to the receiving device;
the receiving device comprising:
a packet receiving unit configured to receive the optical space communication packet;
a decrypting unit configured to decrypt the encrypted data using information related to the encryption key comprised in the optical space communication packet.

## Description

### TECHNICAL FIELD

The present invention relates to a system and method for performing optical space communication, and more particularly to a system and method for performing encrypted optical space communication with packet loss tolerance.

### BACKGROUND ART

Japanese Patent No. 7120607 discloses a secret key sharing system. This system enables optical space communication using packets encrypted with an encryption key. However, there has been a demand for an optical space communication system capable of efficiently transmitting data even when packet loss occurs in encrypted packets.

### PRIOR ART DOCUMENTS

### PATENT LITERATURES

[Patent Literature 1] Japanese Patent No. 7120607

### SUMMARY OF INVENTION

### TECHNICAL PROBLEM

An object of the present invention is to provide an optical space communication system that enables efficient data transmission even when packet loss occurs in encrypted packets.

### MEANS FOR SOLVING THE TECHNICAL PROBLEM

The present invention is based on the insight that, as a countermeasure against packet loss, adding data size, data ID, and a key start number to each packet ensures synchronization of the encryption key, and since this information is repeatedly transmitted, packet loss can be efficiently detected. If there is a gap in the data ID numbers, a retransmitting request can be sent via RF, thereby providing tolerance to packet loss.

The first invention relates to a system 1 for performing optical space communication between a transmitting device and a receiving device. The system comprises a transmitting device 3 and a receiving device 5.

The transmitting device 3 comprises an encrypting unit 11, a packet generating unit 13, and a packet transmitting unit 15. The encrypting unit 11 is configured to encrypt data using an encryption key to obtain encrypted data. The packet generating unit 13 is configured to add information related to the data size of the encrypted data, identification information of the data, and information related to the encryption key to the encrypted data to generate an optical space communication packet. The packet transmitting unit 15 is configured to transmit the optical space communication packet to the receiving device 5.

The receiving device 5 comprises a packet receiving unit 21 and a decrypting unit 23. The packet receiving unit 21 is configured to receive the optical space communication packet. The decrypting unit 23 is configured to decrypt the encrypted data using the information related to the encryption key comprised in the optical space communication packet.

Examples of the identification information of the data comprise the file number of the data and a number in the file specified by the file number of the data. An example of the information related to the encryption key is the key start number. Thus, in this example, the same file number is assigned to multiple packets and sent multiple times. The key start number also means the starting address of the encryption key.

A preferred example of the system 1 described above further comprises a packet count acquiring unit 17.

The packet count acquiring unit 17 is configured to construct a learning model for obtaining a number of times the optical space communication packet is transmitted by using, as training data, optical space climate information that is information related to a climate in an optical space where the optical space communication is performed, and a required number of times the optical space communication packet is transmitted in the optical space climate information, and obtain the number of times the optical space communication packet is transmitted by using the optical space climate information and the learning model.

In a preferred example of the above system 1, the receiving device 5 further comprises an unreceived data information acquiring unit 25 and an RF transmitting unit. The unreceived data information acquiring unit 25 is an element for analyzing the optical space communication packet to acquire identification information related to unreceived data that is not correctly received data among the data. The RF transmitting unit 27 is an element for transmitting identification information related to the unreceived data, caused by packet loss, to the transmitting device 3 using RF communication.

In this example, the transmitting device 3 further comprises an RF receiving unit 19 that receives identification information related to the unreceived data. The packet transmitting unit 15 then transmits to the receiving device 5 a retransmitting packet, which is the optical space communication packet comprising encrypted data identified by the identification information related to the unreceived data.

In this example, if there is a gap in the data number of the received data, a packet loss is likely to have occurred, and therefore a transmitting request can be made via RF.

The second invention relates to a method for performing optical space communication between a transmitting device and a receiving device. This invention is basically a method for performing optical space communication using the system described above.

The transmitting device 3 performs an encryption step, a packet generating step, and a packet transmitting step.

That is, the transmitting device 3 encrypts the data by using the encryption key to obtain encrypted data (encryption step).

The transmitting device 3 adds to the encrypted data, the information related to the data size of the encrypted data, the identification information of the data, and the information related to the encryption key to generate the optical space communication packet (packet generating step).

The transmitting device 3 transmits the optical space communication packet to the receiving device 5 (packet transmitting step).

Then, the receiving device 5 performs a packet receiving step and a decryption step.
That is, the receiving device 5 receives the optical space communication packet (packet receiving step).

The receiving device 5 decrypts the encrypted data by using the information related to the encryption key which is included in the optical space communication packet (decryption step).

### EFFECTS OF THE INVENTION

The present invention can provide an optical space communication system that enables efficient data transmission even when packet loss occurs in encrypted packets.

### BRIEF DESCRIPTION OF THE DRAWINGS

FIG. 1 is a block diagram of a system for performing optical space communication.
FIG. 2 is a conceptual diagram showing an image of the configuration of a data format.

### DETAILED DESCRIPTION OF THE INVENTION

The following describes embodiments of the present invention with reference to the drawings. The present invention is not limited to the embodiments described below, but also comprises appropriate modifications of the embodiments that are obvious to those skilled in the art.

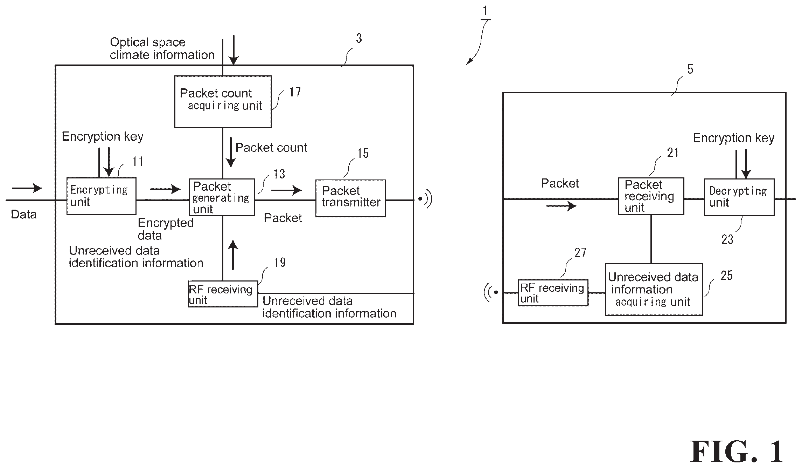

FIG. 1 is a block diagram of a system for performing optical space communication. As shown in FIG. 1, this system 1 comprises a transmitting device 3 and a receiving device 5. This system 1 is a system for performing optical space communication between the transmitting device and the receiving device. This system 1 is mainly used for optical communication between satellites and the ground. Packet loss occurs very frequently in optical communication between satellites and the ground. This system is tolerant to packet loss and is therefore preferably used for optical communication between satellites and the ground. In this system, the encryption key can be shared between the transmitting device 3 and the receiving device 5. The transmitting device 3 and the receiving device 5 are implemented by a computer or a server.

The computer has an input unit, an output unit, a control unit, a calculating unit, and a memory unit, and each element is connected by a bus or the like to enable information exchange. For example, a control program or various information may be stored in the memory unit. When predetermined information is input from the input unit, the control unit reads the control program stored in the memory unit. Then, the control unit reads the information stored in the memory unit as appropriate and transmits it to the calculating unit. The control unit also transmits the input information to the calculating unit as appropriate. The calculating unit performs calculating processing using the received various information and stores it in the memory unit. The control unit reads the calculation results stored in the memory unit and outputs them from the output unit. In this manner, various processes and steps are performed. The various units and means execute these various processes. The computer may have a processor, and the processor may realize various functions and steps. The computer may be standalone. Some of the functions of the computer may be distributed between a server and a terminal. In this case, it is preferable that the server and the terminal can exchange information via a network such as the Internet or an intranet. The computer may comprise a processor and a memory coupled to the processor. The memory may store instructions that, when executed by the processor, cause the computer to perform various processes or function as various elements. The computer may be provided with various training data to construct the learning model and perform various calculations through machine learning. In this case, the computer may perform various analyses using the learning model generated through machine learning and deep learning of AI (artificial intelligence).

The transmitting device 3 comprises an encrypting unit 11, a packet generating unit 13, and a packet transmitting unit 15. The transmitting device 3 may further comprise either or both of a packet count acquiring unit 17 and an RF receiving unit 19. An example of the transmitting device 3 is a data communication device mounted on a satellite (e.g., a low-earth orbit satellite).

The encrypting unit 11 is a component that encrypts data using an encryption key to obtain encrypted data. That is, the encrypting unit 11 encrypts data using an encryption key to obtain encrypted data (encryption step). Methods for encrypting data are well known, and well-known encryption methods and systems can be appropriately adopted. It is preferable to achieve highly confidential optical communication (preferably completely confidential communication) in optical communication between a satellite and the ground. From this perspective, an encryption method using a Vernam encryption key (e.g., a Vernam one-time pad (OTP) encryption) is preferred. For example, Japanese Patent No. 3876324 describes a system in which a Vernam encryption key is shared between a transmitting device and a receiving device. In this example, the transmitting device has an encrypting device, which selects a number sequence from a random number sequence output from a random number sequence sharing device according to a sampling rule, and uses this as a Vernam encryption key. Then, the received information (data) is Vernam-encrypted using the generated Vernam encryption key. The receiving device has a decrypting device. The receiving device selects a number sequence from a random number sequence output from the random number sequence sharing device according to a sampling rule, and uses this as a Vernam encryption key. The receiving device then Vernam-decrypts the received information using the generated Vernam encryption key. One-time pad (OTP) encryption is a cryptographic method that uses a random number sequence only once.

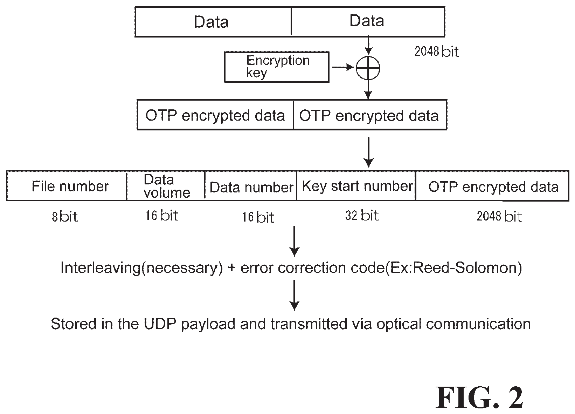

FIG. 2 is a conceptual diagram showing an image of the data format configuration. The transmitting device 3 receives data. This data may be transmitted from another communication means or may be read from a storage unit of the transmitting device 3. An example of the encrypting unit 11 is an OTP encrypting unit. The OTP encrypting unit selects a number sequence from a random number sequence using a sampling rule and generates a one-time pad (OTP) encryption key. The encrypting unit 11 may receive not only data but also the identification information of the data. The OTP encrypting unit encrypts the data using the OTP encryption key to obtain OTP encrypted data. The OTP encrypting unit obtains the information related to the encryption key, such as a key start number, and stores it in a storage unit as appropriate. The OTP encrypting unit may also store either or both information related to the data size of the encrypted data and the identification information of the data in the storage unit.

The packet generating unit 13 is a component that adds information related to the data size of the encrypted data, the identification information of the data, and the information related to the encryption key to the encrypted data, thereby generating the optical space communication packet. That is, the packet generating unit 13 adds information related to the data size of the encrypted data, the identification information of the data, and the information related to the encryption key to the encrypted data, thereby generating the optical space communication packet (packet generating step). Examples of the identification information of the data comprise the file number of the data and the number in the file specified by the file number of the data. Another example of the identification information of the data is the data number. An example of the information related to the encryption key is the key start number. For example, the packet generating unit 13 not only obtains OTP-encrypted data from the encrypting unit 11, but also receives other data from the encrypting unit 11 or reads other data from the storage unit. In this way, the packet generating unit 13 obtains encrypted data, information related to the data size of the encrypted data, the identification information of the data, and the information related to the encryption key, and adds information related to the data size of the encrypted data, the identification information of the data, and the information related to the encryption key to the encrypted data. In this way, the packet generating unit 13 generates the optical space communication packet. The packet generating unit 13 may perform interleaving processing as necessary, or may further add an error correction code such as a Reed-Solomon code to generate the optical space communication packet. Furthermore, as shown in FIG. 2, the encrypted data that has undergone various processes may be stored in the payload for optical communication to generate the optical space communication packet. An example of an optical communication protocol is a connectionless communication protocol, and a specific example is UDP. UDP is an abbreviation for User Data Protocol, and is a communication protocol that emphasizes high-speed communication. Thus, the optical space communication packet may be one that has undergone appropriate known processing, as long as it contains data based on the encrypted data.

Data is encrypted and the optical space communication packet is generated based on the above protocol, so key synchronization can be ensured.

The packet transmitting unit 15 is configured to transmit optical space communication packets to the receiving device 5. That is, the packet transmitting unit 15 transmits the optical space communication packets to the receiving device 5 (packet transmitting step). An example of the packet transmitting unit 15 is a QKD unit. QKD stands for quantum key distribution. The QKD unit converts the optical space communication packets into signal light, combines this with synchronization light, and outputs the combined signal light to the receiving device 5. An example of the packet transmitting unit 15 is a telescope that can output a beacon, and the packet for optical space communication may be transmitted to the receiving device 5 using a light beam system.

The packet count acquiring unit 17 is an element for calculating the number of times to transmit the optical space communication packet using the optical space climate information and the learning model (trained model). The packet count acquiring unit 17 obtains the number of times to transmit the optical space communication packet (packet transmitting count acquiring step). The packet count acquiring unit 17 outputs the number of times to transmit the optical space communication packet to the packet generating unit 13 or the packet transmitting unit 15. The packet transmitting unit 15 receives the number of times to transmit the optical space communication packet and transmits a certain packet that number of times. By transmitting the same packet multiple times, it is possible to provide resistance to packet loss. Furthermore, by setting the number of transmissions appropriately, it is possible to improve processing efficiency.

The packet count acquiring unit 17 preferably uses machine learning to construct a trained model and obtain an appropriate packet transmitting count. The learning model may be a model that obtains the number of times the optical space communication packet is transmitted by using, as training data, the optical space climate information that is the information related to the climate in an optical space where the optical space communication is performed, and the required number of times the optical space communication packet is transmitted in the optical space climate information. Examples of the information related to the climate in the optical space may be one or more of weather, cloud cover, temperature, humidity, satellite altitude, and aerosol concentration. Comprising ground truth data in the training data can improve the accuracy of the trained model. Furthermore, repeating optical communication and feeding back the results of the optical communication can improve the accuracy of the trained model. Furthermore, information related to attenuation of light intensity due to atmospheric conditions and information related to empirical values of optical packet fading may be used as training data.

The receiving device 5 comprises a packet receiving unit 21 and the decrypting unit 23. The receiving device 5 may further comprise an unreceived data information acquiring unit 25 and an RF transmitting unit 27. An example of the receiving device 5 is receiving equipment provided in a ground station.

The packet receiving unit 21 is an element for receiving the optical space communication packet. That is, the packet receiving unit 21 receives the optical space communication packet (packet receiving step). The packet receiving unit 21 receives, for example, the optical space communication packet and separates it into synchronization light and signal light using, for example, an optical demultiplexer.

The decrypting unit 23 is an element for decrypting encrypted data using the information related to the encryption key comprised in the optical space communication packet. The decrypting unit 23 decrypts the encrypted data using the information related to the encryption key comprised in the optical space communication packet (decryption step). For example, the decrypting unit 23 has a QKD (quantum key distribution) module, and a key management unit having the QKD module creates an encryption key for decrypting the optical space communication packet using the information related to the encryption key. The decrypting unit 23 then decrypts the encrypted data using the created encryption key. The decrypted data may be stored in a storage unit as appropriate, or may be output to a user's terminal.

In a preferred example of the system 1, the receiving device 5 further comprises the unreceived data information acquiring unit 25 and an RF transmitting unit 27. The transmitting device 3 further comprises an RF receiving unit 19 that receives the identification information related to the unreceived data.

The unreceived data information acquiring unit 25 is an element that analyzes the optical space communication packets and acquires the identification information related to the unreceived data, which is data that has not been correctly received. The unreceived data information acquiring unit 25 analyzes the optical space communication packets, acquires the identification information of the data, and stores it in a storage unit. If there is missing data, the unreceived data information acquiring unit 25 designates that data as the unreceived data. If the identification information of the data is the file number of the data and the number in the file specified by the file number of the data, the unreceived data information acquiring unit 25 reads the numbers in the file for the file number from the storage unit and confirms whether all numbers have been received. If there is a number that has not been received for a certain file number, the unreceived data information acquiring unit 25 acquires the file number and the data number for that file number as the identification information related to the unreceived data. The unreceived data information acquiring unit 25 may store the acquired identification information related to the unreceived data in a storage unit.

If the identification information of the data is a data number, the unreceived data information acquiring unit 25 reads the data number from the storage unit and causes the calculating unit to perform a calculation to determine the data number that has not been received. If the result is a data number that has not been received, the unreceived data information acquiring unit 25 acquires the data number as the identification information related to the unreceived data. The unreceived data information acquiring unit 25 may store the acquired identification information related to the unreceived data in the storage unit.

The RF transmitting unit 27 is an element for transmitting the identification information related to the unreceived data to the transmitting device 3 using RF communication. The RF transmitting unit 27 transmits the identification information related to the unreceived data to the transmitting device 3 by radio signal using RF communication (unreceived data information transmitting step). RF communication is wireless communication that typically uses a frequency band lower than 750 MHz. An example of the RF transmitting unit 27 is an output device comprising an antenna.

The transmitting device 3 has an RF receiving unit 19 that receives the identification information related to the unreceived data. The RF receiving unit 19 receives the identification information related to the unreceived data (unreceived data information receiving step). An example of the RF receiving unit 19 is an antenna. The RF receiving unit 19 converts the received radio signal into, for example, an electrical signal related to the identification information related to the unreceived data. The identification information related to the unreceived data is output to the packet generating unit 13 or the packet transmitting unit 15. The packet transmitting unit 15 transmits a retransmitting packet to the receiving device 5. The retransmitting packet is the optical space communication packet containing encrypted data identified by the identification information related to the unreceived data. This retransmitting packet may be regenerated by the packet generating unit 13 and output from the packet transmitting unit 15. It is extremely difficult to establish bidirectional communication between a satellite and the ground. In this example, if there is a gap in the data number of the received data, packet loss is likely, so a transmitting request can be made via RF, providing resistance to packet loss.

### INDUSTRIAL APPLICABILITY

The present invention can be used in the field of optical space communication, etc. In particular, since the present invention has tolerance to packet loss, it can be preferably used in the fields of satellite quantum key distribution and completely secure communications.

### REFERENCE SIGNS LIST

1. System
3. Transmitting device
5. Receiving device
11 Encrypting unit
13 Packet generating unit
15 Packet transmitting unit
17 Packet count acquiring unit
19 RF receiving unit
21 Packet receiving unit
23 Decrypting unit
25 Unreceived data information acquiring unit
27 RF transmitting unit

## Claims

1. A system for performing optical space communication between a transmitting device and a receiving device, wherein
the transmitting device comprises:
an encrypting unit configured to encrypt data by using an encryption key to obtain encrypted data;
a packet generating unit configured to add, to the encrypted data, information related to a data size of the encrypted data, identification information of the data, and information related to the encryption key to generate an optical space communication packet; and
a packet transmitting unit configured to transmit the optical space communication packet to the receiving device, and
the receiving device comprises:
a packet receiving unit configured to receive the optical space communication packet; and
a decrypting unit configured to decrypt the encrypted data by using the information related to the encryption key which is included in the optical space communication packet.

2. The system according to claim 1, wherein
the identification information of the data comprises a file number of the data and a number in a file specified by the file number of the data, and
the information related to the encryption key is a key start number.

3. The system according to claim 1, further comprising a packet count acquiring unit configured to
construct a learning model for obtaining a number of times the optical space communication packet is to be transmitted by using, as training data, optical space climate information that is information related to a climate in an optical space where the optical space communication is performed, and a required number of times the optical space communication packet is to be transmitted under the optical space climate information, and
obtain the number of times the optical space communication packet is to be transmitted by using the optical space climate information and the learning model.

4. The system according to claim 1, wherein
the receiving device comprises:
an unreceived data information acquiring unit configured to analyze the optical space communication packet to acquire identification information related to unreceived data, which is not correctly received data among the data; and
an RF transmitting unit configured to transmit the identification information related to the unreceived data to the transmitting device using RF communication,
the transmitting device further comprises an RF receiving unit configured to receive the identification information related to the unreceived data, and
the packet transmitting unit is configured to transmit a retransmitting packet to the receiving device, the retransmitting packet being an optical space communication packet comprising encrypted data specified by the identification information related to the unreceived data.

5. A method of performing optical space communication between a transmitting device and a receiving device, wherein the method comprises:
an encryption step of encrypting, by the transmitting device, data by using an encryption key to obtain encrypted data;
a packet generating step of adding, by the transmitting device, information related to a data size of the encrypted data, identification information of the data, and information related to the encryption key to the encrypted data to generate an optical space communication packet;
a packet transmitting step of transmitting, by the transmitting device, the optical space communication packet to the receiving device;
a packet receiving step of receiving, by the receiving device, the optical space communication packet; and
a decryption step of decrypting, by the receiving device, the encrypted data by using the information related to the encryption key which is included in the optical space communication packet.
